Europäisches Patentamt

(19) European Patent Office

Office européen des brevets

(11) Veröffentlichungsnummer: **0 227 021**
**B1**

(12) **EUROPÄISCHE PATENTSCHRIFT**

(45) Veröffentlichungstag der Patentschrift:
**11.04.90**

(51) Int. Cl.⁴: **B65G 31/04,** B65G 53/58,
A01D 87/10

(21) Anmeldenummer: **86117545.3**

(22) Anmeldetag: **17.12.86**

(54) **Pneumatische Fördervorrichtung mit einem Gebläse zum Fördern von Schüttgut, insbesondere Heu, Stroh oder anderem landwirtschaftlichen Gut.**

(30) Priorität: **17.12.85 DE 3544629**
**27.05.86 DE 3617776**

(43) Veröffentlichungstag der Anmeldung:
**01.07.87 Patentblatt 87/27**

(45) Bekanntmachung des Hinweises auf die Patenterteilung:
**11.04.90 Patentblatt 90/15**

(84) Benannte Vertragsstaaten:
**AT CH DE LI SE**

(56) Entgegenhaltungen:
**AT-B- 232 433**
**CH-A- 503 639**
**CH-A- 520 272**
**DE-A- 3 306 949**
**DE-A- 3 321 735**
**DE-U- 1 844 448**

(73) Patentinhaber: **Hirlinger, Mathias,**
**Friedrich-Liszt-Strasse 15, D-7450 Hechingen(DE)**

(72) Erfinder: **Hirlinger, Mathias, Friedrich-Liszt-Strasse 15,**
**D-7450 Hechingen(DE)**

(74) Vertreter: **Neugebauer, Erich, Dr.,**
**Postfach 260101 Zweibrückenstrasse 10,**
**D-8000 München 26(DE)**

ACTORUM AG

## Beschreibung

Die vorliegende Erfindung betrifft eine pneumatische Fördervorrichtung mit einem Gebläse zum Fördern von Schüttgut, insbesondere Heu, Stroh oder anderem landwirtschaftlichen Gut mit einem mit an einer Scheibe befestigten Schaufeln besetzten, von einem Motor angetriebenen Laufrad in einem Gehäuse, das eine etwa tangential zum Laufradumfang vom Gehäuse weiterführende Förderleitung und eine seitliche Zuführöffnung für das Fördergut aufweist, die mit einem Zuführstutzen mit einer Aufnahmeöffnung versehen ist, die zur Aufnahme des Fördergutes und zum Ansaugen von das Fördergut mitnehmender Luft dient, wobei zwischen dem Laufrad und der die Zuführöffnung aufweisenden Gehäusewand ein von der Zuführöffnung zur Förderleitung führender Durchgang für das Fördergut vorgesehen ist und die der Zuführöffnung des Gehäuses zugewandte Seite des Laufrades in dessen zentralem konzentrischen Mittelbereich eine den Durchtritt von Fördergut in das Laufrad abweisende Abdeckung aufweist.

Eine Fördervorrichtung der eingangs genannten Art ist aus der AT-A 232 433 bekannt. Bei dieser bekannten Fördervorrichtung weist zwar die der Zuführöffnung des Gehäuses zugewandte Seite des Laufrades in dessen zentralem konzentrischen Mittelbereich eine den Durchtritt von Fördergut in das Laufrad abweisende Abdeckung auf, diese Abdeckung kann jedoch nicht verhindern, daß das Fördergut von den Schaufeln bzw. Flügeln des Laufrades erfaßt wird. Dabei besteht die Gefahr, daß das Fördergut, wie z.B. Heu, das von den Schaufeln des Laufrades erfaßt wird, beschädigt wird, so daß bei Förderung erhebliche Verluste auftreten.

Außerdem ergibt sich bei der bekannten Fördervorrichtung wegen des in schwankender Menge in das Laufrad gelangenden Fördergutes ein unruhiger Lauf, und es besteht die Gefahr der Verstopfung. Auch erfordert diese Fördervorrichtung ein verhältnismäßig kräftig dimensioniertes Laufrad, da es oft auch mit festeren Fremdkörpern, wie z.B. Steinen oder Holz in Berührung kommt, die mit dem Schüttgut in die Ansaugleitung gelangen.

Durch die DE-A 3 306 949 ist bereits eine Fördervorrichtung für trockenes, faseriges Schüttgut bekannt, bei der das unmittelbare Einwirken der Schaufeln des Gebläselaufrades auf das Fördergut dadurch vermieden wird, daß der das Fördergut mitnehmende Luftstrom durch eine Injektordüse erzeugt wird. Diese Düse umgibt die Förderleitung ringförmig und läßt einen Luftstrom aus einer Druckkammer mit erhöhtem Druck in die Förderleitung eintreten, wobei die eigentliche Förderluft mit dem Fördergut mitgerissen wird. Das Fördergut kommt dabei mit dem die Luft für die Injektordüse liefernden Laufrad des Gebläses nicht in Berührung. Diese Fördervorrichtung erfordert einen verhältnismäßig großen apparativen Aufwand, auch ist der für den Betrieb der Injektordüse notwendige Druck vergleichsweise hoch und der Kraftbedarf groß.

Der Erfindung liegt die Aufgabe zugrunde, eine Fördervorrichtung zu schaffen, die bei schonender Behandlung des Fördergutes mit geringerem Aufwand auskommt und bei der Verstopfungen weitgehend vermieden werden.

Zur Lösung dieser Aufgabe sind - ausgehend von der eingangs genannten Fördervorrichtung - die im kennzeichnenden Teil des Hauptanspruchs angegebenen Mittel vorgesehen.

Die das Laufrad zur Zuführöffnung hin im wesentlichen vollständig abschirmende, jedoch luftdurchlässige Abdeckung verhindert den Eintritt von Fördergut in das Laufrad und leitet das Fördergut an dem Laufrad vorbei zur Förderleitung. Das Fördergut wird daher schonend behandelt. Infolgedessen tritt auch die bisher oft zu beobachtende Staubentwicklung bei der Fördervorrichtung nach der Erfindung nicht mehr auf. Da auch plötzliche Schläge auf das Laufrad bei dem erfindungsgemäßen Gebläse nicht mehr auftreten können, weist dieses einen ruhigen Lauf auf und kann leichter gebaut werden als ein Gebläse mit zur Saugseite hin offenem Laufrad.

Bei der vorzugsweise am Laufrad befestigten Abdeckung, die die der Zuführöffnung des Gehäuses zugewandte Seite des Laufrades gegen den Durchtritt von Fördergut abschirmt, können die Luftdurchlässe vorteilhafterweise von den Löchern eines gelochten Bleches, eines Drahtgeflechts oder von sich etwa in radialer Richtung erstreckenden Schlitzen gebildet werden, wobei neben den zentralen Bereich der Abdeckung vorzugsweise auch ein äußerer ringförmiger Bereich der Abdeckung luftundurchlässig ist, der in etwa der mittleren radialen Erstreckung des Druckbereichs des Gebläses entspricht. Vorteilhafterweise kann die Abdeckung über den gesamten Bereich des Laufrades kegelförmig oder zumindest im Bereich der Luftdurchlässe etwa kegelstumpfförmig ausgebildet sein, wobei der verjüngte Teil des Kegels bzw. Kegelstumpfes zur Zuführöffnung des Gehäuses hin gerichtet ist.

Erfindungsgemäß können zum Ansaugen von die Förderung unterstützender und Verstopfungen verhindernder Außenluft dienende Lufteinsaugöffnungen vorgesehen sein, die zumindest in einem Teilabschnitt des vor der Saugseite des Gebläses gelegenen Teiles des Förderweges in Umfangsrichtung längs des Förderquerschnittes etwa ringförmig verteilt angeordnet sind.

Vorteilhafterweise können die Lufteinsaugöffnungen in der den Förderquerschnitt begrenzenden Wandung des Zuführstutzens und/oder des Gehäuses des Gebläses, insbesondere im Bereich der Zuführöffnung des letzteren angeordnet sein, wobei sich die Lufteinsaugöffnungen vorzugsweise etwa tangential zu der den Förderquerschnitt begrenzenden Wandung erstrecken.

Vorteilhafte Anordnungen und Ausgestaltungen der Lufteinsaugöffnungen sind in den Unteransprüchen 7 bis 9 gekennzeichnet.

Erfindungsgemäß ist es zur Vermeidung von Verstopfungen vorteilhaft, wenn sich die Größe des Förderquerschnitts zumindest in dem vor der Saugseite des Gebläses gelegenen Teil des Förderweges nach der Aufnahmeöffnung bzw. nach dem Aufnahmetrichter längs des Förderweges vergrö-

Bert. Erfindungsgemäß kann die Vergrößerung des Förderquerschnitts stufenweise erfolgen, wobei sie vorzugsweise entsprechend der radialen Abmessung der Lufteinsaugöffnungen gewählt wird, so daß diese im Bereich der stufenförmigen Vergrößerung des Förderquerschnitts angeordnet werden können.

Besonders vorteilhaft ist es, den Außendurchmesser des Zuführstutzens kleiner als den Innendurchmesser der Zuführöffnung des Gehäuses zu wählen, um in dem dadurch entstehenden ringförmigen Zwischenraum Lufteinsaugöffnungen einmünden zu lassen, wobei die sich dabei ergebende Durchmesservergrößerung in Förderrichtung die Verstopfungsgefahr weiter vermindert. Letzteres gilt auch dann, wenn am freien Ende des Zuführstutzens ein zur Aufnahme des Fördergutes und der Förderluft dienender Aufnahmetrichter mit seinem verjüngten Abschnitt, dessen Außendurchmesser kleiner als der Innendurchmesser des Zuführstutzens ist, so mittels Abstandsbolzen im vorderen Ende des Zuführstutzens befestigt wird, daß zwischen letzterem und der Außenfläche des Aufnahmetrichters ein ringförmiger Luftdurchgang verbleibt.

Erfindungsgemäß kann es zweckmäßig sein, die Lufteinsaugöffnungen so auszubilden, daß die Größe ihres freien Strömungsquerschnitts verstellbar ist.

Die durch die im wesentlichen vollständige Abdeckung der der Zuführöffnung zugewandten Seite des Laufrades bewirkte schonende Behandlung des Fördergutes kann durch die mittels der Lufteinsaugöffnungen angesaugte zusätzliche Luft noch verbessert werden, insbesondere dann, wenn diese zusätzliche Luft das Fördergut auf seinem Weg durch den Zuführstutzen und das Gebläsegehäuse vorbei am Laufrad möglichst weitgehend und möglichst ringsherum um den gesamten Förderquerschnitt einhüllt und das Fördergut dadurch im Abstand von der Wandung gehalten wird. Zur besseren Führung des Fördergutes kann dabei die Abdeckung über den ganzen Bereich des Laufrades kegelförmig oder zumindest im Bereich der Luftdurchlässe etwa kegelstumpfförmig ausgebildet sein, wobei der verjüngte Teil des Kegels bzw. Kegelstumpfes zur Zuführöffnung des Gehäuses hin gerichtet ist.

Im folgenden wird die Erfindung anhand schematischer Zeichnungen an Ausführungsbeispielen näher erläutert. Es zeigt

Fig. 1 einen Querschnitt durch eine Ausführungsform der erfindungsgemäßen Fördervorrichtung;
Fig. 2 die Fördervorrichtung gemäß Fig. 1 im Längsschnitt;
Fig. 3 einen Querschnitt durch eine abgewandelte Ausführungsform der erfindungsgemäßen Fördervorrichtung und
Fig. 4 die Fördervorrichtung gemäß Fig. 3 im Längsschnitt.

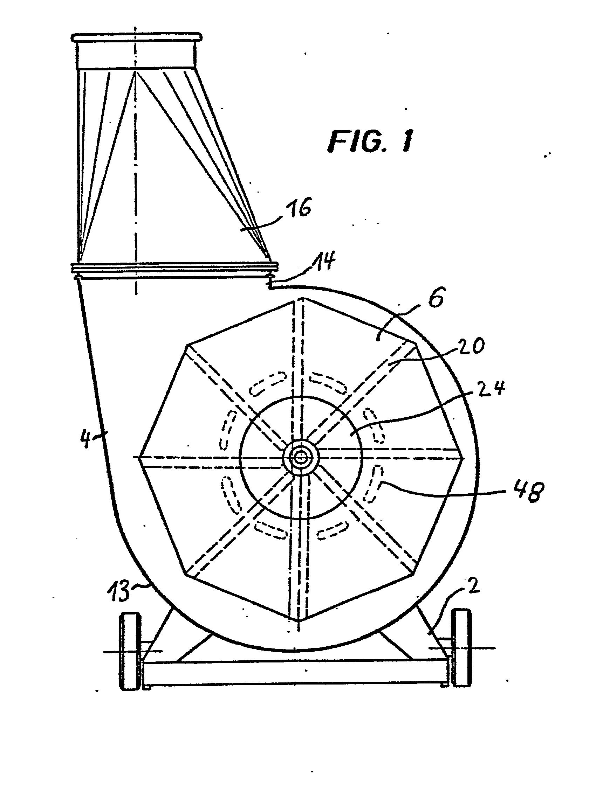

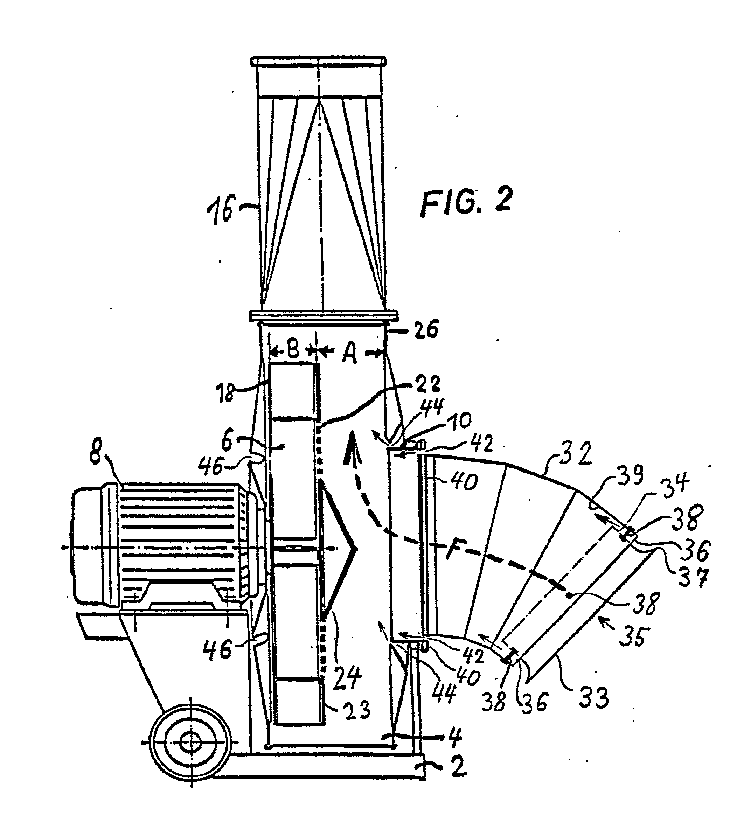

Bei dem Ausführungsbeispiel gemäß Fig. 1 und 2 ist auf einem fahrbaren Gestell 2 ein Gehäuse 4 befestigt, in dem ein Laufrad 6 gelagert ist. Dieses wird von einem Motor 8 mit etwa 1000 bis 3000, vorzugsweise 1500, Umdrehungen/min angetrieben. Das Gehäuse 4 ist an seinem im wesentlichen spiralförmigen Mantel 13 mit einem tangential herausführenden Stutzen 14 versehen, an den die eigentliche Förderleitung 16 anschließbar ist.

Das auf der Motorwelle fliegend gelagerte Laufrad 6 besteht aus einer motorseitigen Scheibe 18, auf der radiale Schaufeln 20 befestigt sind, wie in Fig. 1 durch gestrichelte Linien eingezeichnet. Die Schaufeln 20 können aber auch gekrümmt sein. Zur Zuführöffnung 10 hin ist das Laufrad 6 mit einer auf den Schaufeln befestigten Abdeckung 22 abgedeckt, die aus einem Lochblech besteht, das z.B. mit Löchern von ca. 2,5 mm Durchmesser versehen ist, die insgesamt eine freie Durchgangsfläche für die Luft vorzugsweise etwa von 35 % ergeben. Der zentrale Bereich der Abdeckung 22 ist durch eine kegelige Haube 24, deren Spitze zur Ansaugeöffnung 10 hin gerichtet ist, luftundurchlässig gemacht. Ebenso luftundurchlässig ist auch ein ringförmiger äußerer Bereich 23 am Umfang der Abdeckung 22, der sich radial vom Rand des Laufrades 6 über den Druckbereich des Gebläses nach innen erstreckt. Zwischen der Abdeckung 22 und der benachbarten Gehäusewand 26 ist ein für den Durchgang des Fördergutes ausreichender Abstand A vorgesehen.

Bei der Auslegung der erfindungsgemäßen Fördervorrichtung zur Förderung von Heu und Stroh wird der Abstand A für den Durchgang des Fördergutes vorzugsweise etwa so groß wie die Breite B des Laufrades 6, vorzugsweise wird das Verhältnis A : B zwischen 0,6 : 1 und 1,5 : 1, insbesondere etwa = 1,2 : 1, gewählt. In der Praxis wird der Abstand A bei der Förderung von Heu und Stroh vorzugsweise zwischen 150 und 200 mm gewählt.

An der dem Laufrad 6 gegenüberliegenden Seite des Gehäuses 4 angeordneten Zuführöffnung 10 ist ein Zuführstutzen 32 mittels eines Flansches 40 angeschlossen. Das freie Ende des Zuführstutzens 32 ist mit einem Ansaugtrichter 33 versehen, durch dessen Ansaugöffnung 35 das Fördergut und die Förderluft angesaugt werden. Der Förderweg F des Fördergutes ist in Fig. 2 durch eine gestrichelte Linie angedeutet. Der Aufnahmetrichter 33 erstreckt sich mit seinem verjüngten Abschnitt 34, dessen Außendurchmesser kleiner als der Innendurchmesser des Zuführstutzens 32 ist, ein Stück in letzteren hinein. Dabei wird der Abschnitt 34 des Ansaugtrichters 33 mittels Abstandsbolzen 38 in einem solchen Abstand von der Innenwand 39 des Zuführstutzens 32 gehalten, daß zwischen dem Ansaugtrichter 33 und dem freien Ende des Zuführstutzens 32 eine ringförmige Lufteinsaugöffnung 36 gebildet wird. Über diese ringförmige Lufteinsaugöffnung 36 wird zusätzlich Außenluft eingesaugt, die die Förderung des Fördergutes unterstützt und dieses allseitig umhüllt, um Verstopfungen zu vermeiden. Im allgemeinen wird die Differenz zwischen dem Außendurchmesser des verjüngten Abschnitts 34 des Ansaugtrichters 33 und dem Innendurchmesser des Zuführstutzens 32 entsprechend der gewünschten radialen Weite der Lufteinsaugöffnung 36 bemessen. Erfindungsgemäß kann aber der freie Strömungsquerschnitt der Lufteinsaugöffnung 36 dadurch verstellbar ausgebildet werden, daß die Abstandsbolzen 38 nicht fest mit dem Abschnitt 34 des Ansaugtrichters 35 verbunden werden, sondern der Abschnitt 34 mit Langlöchern versehen wird, derart, daß der Ansaugtrichter 33 axial in den Zuführstutzen 32 hinein verschiebbar ist, so daß der Abstand zwischen dem äußeren Rand 37 des Ansaugtrichters 35 und dem freien Ende des Zuführtrichters 32 verkleinert und dadurch der freie Strömungsquerschnitt der Lufteinsaugöffnung 36 verringert werden kann.

Wie aus Fig. 2 ersichtlich, ist der Innendurchmesser der Zuführöffnung 10 größer als der Außendurchmesser des Zuführstutzens 32 bemessen. Dabei ist die Durchmesserdifferenz zwischen dem Innendurchmesser der Zuführöffnung 10 und dem Außendurchmesser des Zuführstutzens 32 entsprechend dem Platzbedarf gewählt, der für die Anbringung von Lufteinsaugöffnungen 42 im Flansch 40 des Zuführstutzens 32 erforderlich ist. Die Lufteinsaugöffnungen 42 sind in Umfangsrichtung des Zuführstutzens 32 vorzugsweise gleichförmig um diesen verteilt angeordnet und können aus Bohrungen oder sich in Umfangsrichtung erstreckenden Schlitzen bestehen. Des weiteren sind in der Wandung des Gehäuses 4 Lufteinsaugöffnungen 44 rings um die Zuführöffnung 10 angeordnet. Diese Lufteinsaugöffnungen 44 sind vorzugsweise so ausgebildet, daß die Strömungsrichtung der aus diesen Lufteinsaugöffnungen austretenden Luft in etwa parallel zur gewünschten Strömungsrichtung des Fördergutes verläuft.

Falls erwünscht, kann die Größe des freien Strömungsquerschnitts der Lufteinsaugöffnungen 42 und/oder 44 verstellbar ausgebildet werden. Dies kann z.B. mittels geeigneter, in Fig. 2 nicht dargestellter Blenden erfolgen, die vor die Lufteinsaugöffnungen 42 bzw. 44 schiebbar sind, um deren freien Strömungsquerschnitt in dem gewünschten Ausmaß zu verkleinern.

Bei dem Ausführungsbeispiel gemäß Fig. 1 und 2 sind in der der Zuführöffnung 10 abgewandten Rückwand 5 des Gehäuses 4 Lufteinsaugöffnungen 46 vorzugsweise in gleichem radialen Abstand von der Achse des Laufrades 6 in Umfangsrichtung gleichmäßig verteilt angeordnet. Gleichzeitig sind in der motorseitigen Scheibe 18 des Laufrades 6 vorzugsweise etwa schlitzförmige Lufteinsaugöffnungen 48 ausgebildet, die in etwa den gleichen entsprechenden radialen Abstand von der Achse des Laufrades aufweisen wie die Öffnungen 46 und vorzugsweise ebenfalls gleichmäßig in Umfangsrichtung verteilt sind. Die Lufteinsaugöffnungen 46, 48 dienen dazu, dem Laufrad 6 sogenannte Falschluft zuzuführen, um - falls erwünscht - die Luftfördermenge in der Förderleitung 16 zu vergrößern und gleichzeitig die an der Zuführseite über die Zuführöffnung und den Zuführstutzen angesaugte Luftmenge und damit auch die Menge des angesaugten Fördergutes zu verringern. Eine derartige Zuführung von Falschluft kann vorteilhaft sein, um Verstopfungen zu beseitigen oder zu verhindern.

Vorzugsweise ist der freie Strömungsquerschnitt der Lufteinsaugöffnungen 46, 48 verstellbar ausgebildet. Dies kann erfindungsgemäß insbesondere dadurch erfolgen, daß im Bereich der Lufteinsaugöffnungen 46 nicht dargestellte verstellbare Blenden vorgesehen sind, die eine vorzugsweise stufenlose Veränderung des freien Strömungsquerschnittes der Lufteinsaugöffnungen 46 ermöglichen.

Erfindungsgemäß kann es vorteilhaft sein, die Größe des freien Strömungsquerschnittes der Lufteinsaugöffnungen 46 und damit die Menge der zugeführten Falschluft in Abhängigkeit von der Strömungsgeschwindigkeit der Förderluft bzw. des Fördergutes zu regeln, derart, daß bei Verringerung der Strömungsgeschwindigkeit der freie Strömungsquerschnitt der Lufteinsaugöffnungen 46 vergrößert wird und bei Erhöhung der Strömungsgeschwindigkeit der freie Strömungsquerschnitt der Lufteinsaugöffnungen 46 verringert wird. Dabei kann die Veränderung des freien Strömungsquerschnitts der Lufteinsaugöffnungen 46 durch Verstellung von Blenden mittels Stellmotoren erfolgen, die von einem vorzugsweise im Bereich des Stutzens 14 oder der Förderleitung 16 angeordneten Strömungsmeßfühler zur Messung der Strömungsgeschwindigkeit der Förderluft gesteuert werden.

Wenn die erfindungsgemäße Fördereinrichtung in Verbindung mit einer Heuverteileranlage bekannter Bauart verwendet wird, kann es vorteilhaft sein, den Strömungsmeßfühler nicht im Bereich des Stutzens 14 oder der angrenzenden Förderleitung 16 anzuordnen, sondern am Ende der Heuverteileranlage im Bereich des Auswurfkrümmers. Hierdurch ist es möglich, die Geschwindigkeit der austretenden Förderluft so zu regeln, daß einerseits eine hinreichende Wurfweite des Fördergutes sichergestellt wird, andererseits aber eine zu hohe Austrittsgeschwindigkeit der Förderluft und damit verbundene Nachteile, wie Staubentwicklung oder dgl. vermieden werden.

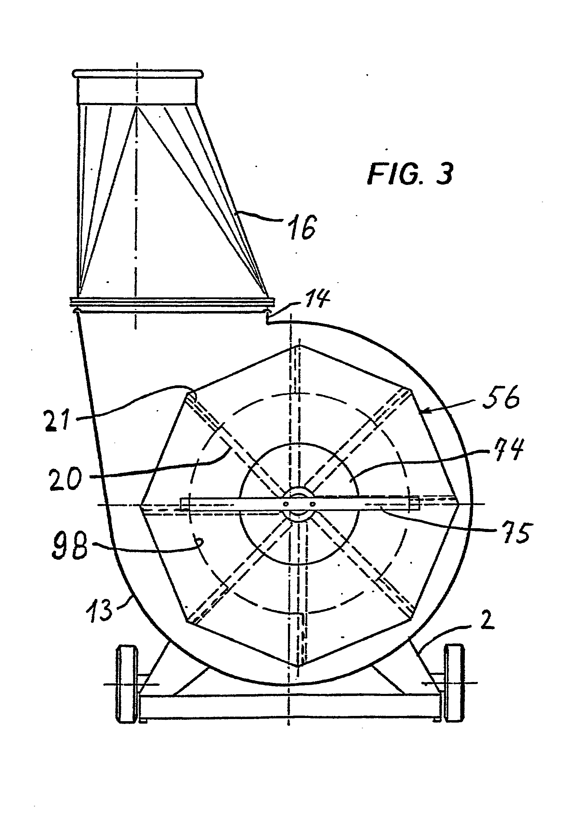

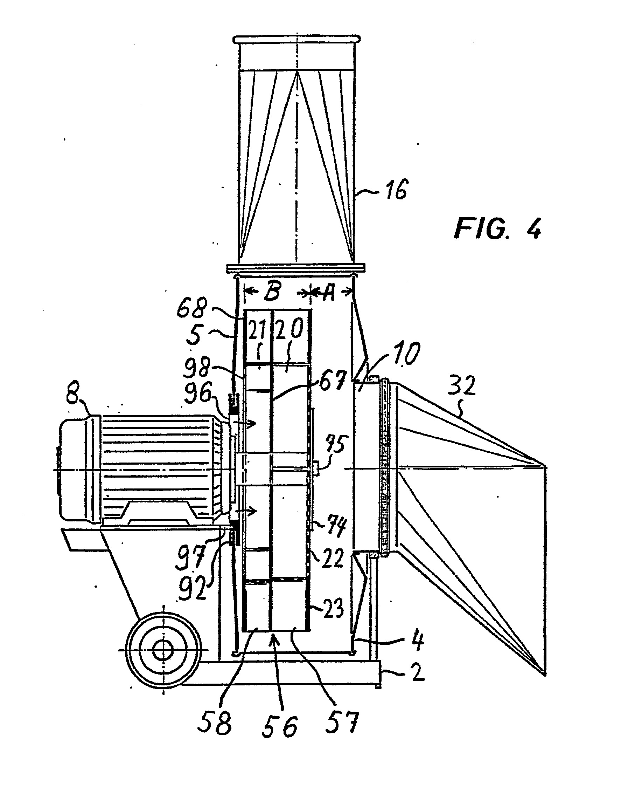

Die Fig. 3 und 4 zeigen eine abgewandelte Ausführungsform der erfindungsgemäßen Fördervorrichtung, wobei sich entsprechende und ähnliche Teile mit den gleichen Bezugsziffern wie in Fig. 1 und 2 bezeichnet sind. Abweichend von der Ausführungsform nach Fig. 1 und 2 ist bei der Ausführungsform nach Fig. 3 und 4 auf der Welle des Motors 8 ein zweiteiliges Laufrad 56 fliegend gelagert. Der der Zuführöffnung 10 zugewandte vordere Teil 57 des Laufrades 56 ist durch eine durchgehende Scheibe 67 von dem hinteren Teil 58 des Laufrades abgeteilt. Der vordere Teil 57 des Laufrades weist acht radiale Schaufeln 20 auf, die auf der Scheibe 67 befestigt sind. Zur Zuführöffnung 10 hin ist das Laufrad 56 mit einem an den Schaufeln 20 befestigten Lochblech 22 abgedeckt. Der zentrale Bereich des Lochbleches 22 ist durch eine kreisförmige Platte 74 abgedeckt. Der ringförmige äußere Bereich 23 der Abdeckung 22 ist luftundurchlässig ausgebildet. Quer über die Abdeckung 22 erstreckt sich eine Wirbelleiste 75, die dazu dient, das Fördergut von dem gelochten Bereich der Abdeckung 22 fernzuhalten, um ein Verstopfen der Löcher der Abdeckung zu verhindern. Der rückwärtige Teil 58 des Laufrades 56 weist acht Schaufeln 21 auf, die an der den Schaufeln 20 abgewandten Seite der Scheibe 67 angeordnet sind und zwischen deren äußerem Bereich und einem ringförmigen Bauteil 68 befestigt sind. Die Schaufeln 21 haben eine begrenzte radiale Länge und erstrecken sich nur von den jeweiligen Ecken der Scheibe 67 bis zur zentralen Öffnung 98 des ringförmigen Bauteils 68. In einem Ring 92, der an einer Konsole 97 des Gestells 2 befestigt ist und ein U-förmiges Querschnittsprofil aufweist, ist die Rückwand 5 des Gehäuses 4 drehbar gelagert, so daß sich das ganze Gehäuse 4 als Ganzes um den Ring 92 verdrehen läßt. Zwischen dem Ring 92 und dem Motor 8 ist ein ringförmiger Luftspalt 96 vorhanden, dessen freier Strömungsquerschnitt mittels nicht dargestellter verstellbarer Blenden veränderbar ist. Durch den Luftspalt 96 und die Öffnung 98 des ringförmigen Bauteils 68 kann Falschluft in den rückwärtigen Teil 58 des Laufrades 56 gesaugt und als zusätzliche Förderluft der Förderleitung 16 zugeführt werden. In analoger Weise wie im Zusammenhang mit den Lufteinsaugöffnungen 46 des Ausführungsbeispiels gemäß Fig. 1 und 2 beschrieben, kann auch die Größe des freien Strömungsquerschnitts des Luftspaltes 96, an dessen Stelle natürlich auch mehrere Lufteinsaugöffnungen vorgesehen sein können, in Abhängigkeit von der Strömungsgeschwindigkeit der Förderluft und/oder des Fördergutes geregelt werden. Dabei kann der Strömungsmeßfühler ebenfalls im Bereich des Stutzens 14 oder der Förderleitung 16 oder gegebenenfalls im Bereich des Auswurfkrümmers einer Heuverteileranlage angeordnet sein. Insbesondere kann ein Strömungsmeßfühler in Form eines sich in die Strömung erstreckenden schwenkbar gelagerten Flügels im Förderrohr angeordnet werden.

Auch bei dem zweiteiligen Laufrad 56 kann anstelle der Platte 74 ein Kegel 24 vorgesehen werden oder die gesamte Abdeckung 22 kegelförmig ausgebildet sein.

Ferner kann auch beim Ausführungsbeispiel gemäß Fig. 3 und 4 ein Zuführstutzen gemäß Fig. 2 mit Lufteinsaugöffnungen 36 und 42 verwendet werden, und es können auch im Bereich der Zuführöffnung 10 Luftansaugöffnungen 44 ausgebildet sein.

**Patentansprüche**

1. Pneumatische Fördervorrichtung mit einem Gebläse zum Fördern von Schüttgut, insbesondere Heu, Stroh oder anderem landwirtschaftlichen Gut mit einem mit an einer Scheibe (18) befestigten Schaufeln (20) besetzten, von einem Motor (8) angetriebenen Laufrad (6) in einem Gehäuse (4), das eine etwa tangential zum Laufradumfang vom Gehäuse weiterführende Förderleitung (16) und eine seitliche Zuführöffnung (10) für das Fördergut aufweist, die mit einem Zuführstutzen (32) mit einer Aufnahmeöffnung versehen ist, die zur Aufnahme des Fördergutes und zum Ansaugen von das Fördergut mitnehmender Luft dient, wobei zwischen dem Laufrad (6) und der die Zuführöffnung (10) aufweisenden Gehäusewand (26) ein von der Zuführöffnung (10) zur Förderleitung (16) führender Durchgang (A) für das Fördergut vorgesehen ist und die der Zuführöffnung (10) des Gehäuses (4) zugewandte Seite des Laufrades (6) in dessen zentralem konzentrischen Mittelbereich eine den Durchtritt von Fördergut in das Laufrad (6) abweisende Abdeckung (22) aufweist, dadurch gekennzeichnet, daß sich die Abdeckung (22) im wesentlichen über die gesamte, der Zuführöffnung (10) des Gehäuses (4) zugewandten Seite des Laufrades (6) erstreckt und mit Luftdurchlässen versehen ist, derart, daß das Fördergut von den Schaufeln (20) des Laufrades (6) nicht erfaßt werden kann.

2. Pneumatische Fördervorrichtung nach Anspruch 1, dadurch gekennzeichnet, daß die Luftdurchlässe der den Durchtritt von Fördergut in das Laufrad abweisenden Abdeckung (22) von einem gelochten Blech, von einem Drahtgeflecht oder von sich etwa in radialer Richtung erstreckenden Schlitzen gebildet werden.

3. Pneumatische Fördervorrichtung nach Anspruch 1 oder 2, dadurch gekennzeichnet, daß der äußere ringförmige Bereich (23) der Abdeckung (22), der in etwa der mittleren radialen Erstreckung des Druckbereichs des Gebläses entspricht, luftundurchlässig ist.

4. Pneumatische Fördervorrichtung nach einem oder mehreren der Ansprüche 1 bis 3, dadurch gekennzeichnet, daß die Abdeckung (22) über den gesamten Bereich des Laufrades (6) kegelförmig oder zumindest im Bereich der Luftdurchlässe etwa kegelstumpfförmig ausgebildet ist, wobei der verjüngte Teil des Kegels bzw. Kegelstumpfes zur Zuführöffnung (10) des Gehäuses (4) hin gerichtet ist.

5. Pneumatische Fördervorrichtung nach einem oder mehreren der Ansprüche 1 bis 4, dadurch gekennzeichnet, daß Lufteinsaugöffnungen (36, 42, 44) zum Ansaugen von die Förderung unterstützender Außenluft zumindest in einem Teilabschnitt des vor der Saugseite des Gebläses gelegenen Teiles des Förderweges (F) für das Fördergut längs des Außenumfangs des Förderquerschnittes etwa ringförmig verteilt angeordnet sind.

6. Pneumatische Fördervorrichtung nach Anspruch 5, dadurch gekennzeichnet, daß die Lufteinsaugöffnungen (36, 42, 44) in der den Förderquerschnitt begrenzenden Wandung des Zuführstutzens (32) und/oder des Gehäuses (4), insbesondere im Bereich der Zuführöffnung (10) des letzteren angeordnet sind und sich vorzugsweise in etwa tangential zu der den Förderquerschnitt begrenzenden Wandung erstrecken.

7. Pneumatische Fördervorrichtung nach Anspruch 5 oder 6, dadurch gekennzeichnet, daß in der Wandung des Gehäuses (4) im Bereich der Zuführöffnung (10) und/oder am Zuführstutzen (32) eine oder mehrere vorzugsweise etwa ringförmig verteilte oder etwa ringförmig ausgebildete Lufteinsaugöffnungen (36, 42, 44) vorgesehen sind, wobei vorzugsweise der Außendurchmesser des Zuführstutzens (32) kleiner als der Innendurchmesser der Zuführöffnung (10) ist und der Zuführstutzen (32) mittels eines Flansches (40) an die Zuführöffnung (10) angeflanscht ist, in dem eine Vielzahl von Lufteinsaugöffnungen (42), vorzugsweise in Umfangsrichtung etwa gleichförmig verteilt, angeordnet sind.

8. Pneumatische Fördervorrichtung nach einem oder mehreren der Ansprüche 5 bis 7, dadurch gekennzeichnet, daß unmittelbar hinter der Aufnahmeöffnung (35) des Zuführstutzens (32) eine etwa ringförmige Lufteinsaugöffnung (36) angeordnet ist, die vorzugsweise zwischen der Außenfläche eines die Aufnahmeöffnung (35) umschließenden Aufnahmetrichters (33) und der Innenwandung (39) des Zuführstutzens (32) dadurch gebildet ist, daß der verjüngte Abschnitt (34) des Aufnahmetrichters (33) mittels Abstandsbolzen (38) so im vorderen Abschnitt des Zuführstutzens (32) befestigt ist, daß zwischen letzterem und der Außenfläche des Aufnahmetrichters (33) ein ringförmiger Luftdurchgang verbleibt.

9. Pneumatische Fördervorrichtung nach einem oder mehreren der Ansprüche 5 bis 8, dadurch gekennzeichnet, daß die Größe des freien Strömungsquerschnitts der Lufteinsaugöffnungen (36, 42, 44) verstellbar und/oder in Abhängigkeit von der Strömungsgeschwindigkeit der Förderluft und/oder des Fördergutes regelbar ist.

10. Pneumatische Fördervorrichtung nach einem oder mehreren der Ansprüche 1 bis 9, dadurch gekennzeichnet, daß sich die Größe des Förderquerschnitts zumindest in dem vor der Saugseite des Gebläses gelegenen Teil des Förderweges (F) nach der Aufnahmeöffnung bzw. nach dem Aufnahmetrichter (33) längs des Förderweges (F) vergrößert, wobei die Vergrößerung des Förderquerschnitts vorzugsweise stufenweise erfolgt und die Lufteinsaugöffnungen (36, 42, 44) vorzugsweise im Bereich der stufenförmigen Vergrößerung des Förderquerschnitts angeordnet sind.

## Claims

1. Pneumatic conveying apparatus comprising a fan for conveying bulk material, in particular hay, straw or other agricultural products, comprising an impeller (6) equipped with blades (20) secured to a disc (18) and driven by a motor (8) in a housing (4) which comprises a conveying conduit (16) leading on from the housing substantially tangentially to the impeller periphery and a lateral supply opening (10) for the conveyed material which is provided with a supply connecting piece (32) with a receiving opening which serves to receive the conveyed material and for sucking in air entraining the conveyed material, wherein between the impeller (6) and the housing wall (26) comprising the supply opening (10) a passage (A) leading from the supply opening (10) to the conveying conduit (16) is provided for the conveyed material and the side of the impeller (6) facing the supply opening (10) of the housing (4) comprises in the central concentric middle area thereof a cover (22) repelling the passage of conveyed material into the impeller (6), characterized in that the cover (22) extends substantially over the entire side of the impeller (6) facing the supply opening (10) of the housing (4) and is provided with air passages in such a manner that the conveyed material cannot be engaged by the blades (20) of the impeller (6).

2. Pneumatic conveying apparatus according to claim 1, characterized in that the air pasages of the

cover (22) repelling the passage of conveyed material into the impeller are formed by a perforated metal sheet, by a wire mesh or by slits extending substantially radially.

3. Pneumatic conveying apparatus according to claim 1 or 2, characterized in that the outer annular region (23) of the cover (22) which corresponds substantially to the centre radial extent of the pressure region of the fan is airimpermeable.

4. Pneumatic conveying apparatus according to one or more of claims 1 to 3, characterized in that the cover (22) is formed over the entire region of the impeller (6) conically or at least substantially frusto-conically in the region of the air passages, the tapered portion of the cone or truncated cone being directed towards the supply opening (10) of the housing (4).

5. Pneumatic conveying apparatus according to one or more of claims 1 to 4, characterized in that the air intake openings (36, 42, 44) for induction of the surrounding air supporting the conveying are distributed substantially annularly along the outer periphery of the conveying cross-section at least in a partial section of the part of the conveying path (F) for the conveyed material disposed in front of the suction side of the fan.

6. Pneumatic conveying apparatus according to claim 5, characterized in that the air intake openings (36, 42, 44) are arranged in the wall of the supply connecting piece (32) defining the conveying cross-section and/or of the housing (4), in particular in the region of the supply opening (10) of the latter, and extend preferably substantially tangentially to the wall defining the conveying cross-section.

7. Pneumatic conveying apparatus according to claim 5 or 6, characterized in that in the wall of the housing (4) in the region of the supply opening (10) and/or at the supply connecting piece (32) one or more preferably substantially annularly distributed or substantially annularly formed air intake openings (36, 42, 44) are provided, the outer diameter of the supply connecting piece (32) preferably being smaller than the inner diameter of the supply opening (10) and the supply connecting piece (32) being flanged to the supply opening (10) by means of a flange (40) in which a plurality of air intake openings (42) are arranged, preferably distributed substantially uniformly in the peripheral direction.

8. Pneumatic conveying apparatus according to one or more of claims 5 to 7, characterized in that immediately behind the receiving opening (35) of the supply connecting piece (32) a substantially annular air intake opening (36) is arranged which is formed preferably between the outer surface of a receiving funnel (33) surrounding the receiving opening (35) and the inner wall (39) of the supply connecting piece (32) in such a manner that the tapered portion (34) of the receiving funnel (33) is secured by means of spacing bolts (38) in the front portion of the supply connecting piece (32) so that between the latter and the outer surface of the receiving funnel (33) an annular air passage remains.

9. Pneumatic conveying apparatus according to one or more of claims 5 to 8, characterized in that the size of the free flow cross-section of the air intake openings (36, 42, 44) is adjustable and/or regulatable in dependence upon the flow rate of the conveying air and/or the conveyed material.

10. Pneumatic conveying apparatus according to one or more of claims 1 to 9, characterized in that the size of the conveying cross-section increases at least in the part of the conveying path (F) disposed in front of the suction side of the fan towards the receiving opening or towards the receiving funnel (33) along the conveying path (F), the increase in the conveying cross-section preferably being stepwise and the air intake openings (36, 42, 44) preferably being arranged in the region of the step-like increase in the conveying cross-section.

**Revendications**

1. Elévateur pneumatique avec un ventilateur pour matières en vrac, notamment foins, paille ou d'autres produits agricoles, avec un rotor (6) constitué par un disque (18) muni d'aubes (20), entraîné par un moteur (8) et logé dans un carter (4) comprenant une tubulure de sortie (16) à peu près tangentielle au pourtour du rotor et une entrée latérale (10) pour les matières à transporter, munie d'une tubulure d'amenée (32) avec une ouverture pour les matières à transporter et l'aspiration de l'air destiné à entraîner ces matières, un passage (A) pour les matières étant ménagé entre le rotor (6) et la paroi (26) du carter présentant l'entrée (10), ledit passage s'étendant de l'entrée (10) jusqu'à la tubulure de sortie (16), et la face du rotor (6) regardant l'entrée (10) du carter (4) étant munie d'un couvercle (22) empêchant la pénétration de matières à transporter dans le rotor (6), caractérisé par le fait que le couvercle (22) s'étend essentiellement sur la totalité de la face du rotor (6) regardant l'entrée (10) du carter (4), et est muni d'orifices de sorte à empêcher que les matières à transporter ne soient pas saisies par les aubes (20) du rotor (6).

2. Elévateur pneumatique suivant la revendication 1, caractérisé par le fait que le couvercle (22) destiné à empêcher la pénétration de matières à transporter dans le rotor est formé par une tôle perforée ou un treillis métallique ou est muni de fentes s'étendant à peu près radialement.

3. Elévateur pneumatique suivant la revendication 1 ou 2, caractérisé par le fait que le bord (23) du couvercle (22), qui correspond à peu près à l'étendue radiale moyenne de la zone active du ventilateur, est étanche à l'air.

4. Elévateur pneumatique suivant l'une ou plusieurs des revendications 1 à 3, caractérisé par le fait que le couvercle (22), sur l'étendue totale du rotor (6), a une forme conique, ou au moins une forme à peu près tronconique couvrant la zone des orifices d'air, la partie allant se rétrécissant du cône ou du tronc de cône regardant l'entrée (10) du carter (4).

5. Elévateur pneumatique suivant l'une ou plusieurs des revendications 1 à 4, caractérisé par le fait que les orifices (36, 42, 44) pour l'aspiration d'air extérieur destiné à aider le transport des matières sont, au moins le long d'une partie du trajet (F) en amont du côté aspirateur du ventilateur, disposés à peu près circulairement à la périphérie de la tubulure d'amenée.

6. Elévateur pneumatique suivant la revendication 5, caractérisé par le fait que les orifices d'aspiration d'air (36, 42, 44) sont prévus dans la paroi de la tubulure d'amenée (32) déterminant la section de passage, et/ou du carter (4) notamment à proximité de l'entrée (10) de ce dernier, et s'étendent de préférence à peu près tangentiellement à la paroi délimitant la section de passage.

7. Elévateur pneumatique suivant la revendications 5 ou 6, caractérisé par le fait que la paroi du carter (4) à proximité de l'entrée (10) et/ou la tubulure d'amenée (32) sont munies d'une ou de plusieurs orifices d'aspiration d'air (36, 42, 44) de préférence disposés à peu près en forme de cercle ou de forme à peu près circulaire, le diamètre extérieur de la tubulure d'amenée (32) étant de préférence inférieur au diamètre intérieur de l'entrée (10), et la tubulure d'amenée (32) étant raccordée à l'entrée (10) au moyen d'un flasque (40) muni d'un grand nombre d'orifices d'aspiration d'air (42) répartis de préférence à peu près également sur le pourtour.

8. Elévateur pneumatique suivant l'une ou plusieurs des revendications 5 à 7, caractérisé par le fait que immédiatement en aval de l'entrée (35) de la tubulure d'amenée (32) il est prévu un orifice d'aspiration (36) à peu près annulaire formé de préférence par la face extérieure d'une trémie d'admission (33) entourant l'entrée (35), et la face intérieure (39) de la tubulure d'amenée (32), la partie rétrécie (34) de la trémie d'admission (33) étant fixée par des boulons entretoises (38) sur la partie avant de la tubulure d'amenée (32) de sorte à former entre cette dernière et la face extérieure de la trémie (33) une admission d'air circulaire.

9. Elévateur pneumatique suivant l'une ou plusieurs des revendications 5 à 8, caractérisé par le fait que la section libre des orifices d'aspiration (36, 42, 44) est réglable et/ou variable en fonction de la vitesse d'écoulement d'air et/ou des matières à transporter.

10. Elévateur pneumatique suivant l'une ou plusieurs des revendications 1 à 9, caractérisé par le fait que la section de passage du trajet (F) au moins entre le côté aspiration du ventilateur et l'entrée ou la trémie d'admission (33) s'élargit, cet élargissement se faisant de préférence par échelons et les orifices d'aspiration d'air (36, 42, 44) étant disposés de préférence aux différents échelons d'élargissement de la section de passage.

FIG. 1

FIG. 2

FIG. 3

FIG. 4